# EUROPÄISCHE PATENTSCHRIFT

(11) **EP 3 755 448 B1**
(45) Veröffentlichungstag und Bekanntmachung des Hinweises auf die Patenterteilung: **07.12.2022**
(21) Anmeldenummer: 19706417.3
(22) Anmeldetag: 11.02.2019
(51) Int. Cl.: B01D 29/03, A61J 3/00, B01D 63/08, B01D 39/16

(54) **MEDIENFILTRATIONSVORRICHTUNG**
MEDIA FILTRATION DEVICE
DISPOSITIF DE FILTRATION DE FLUIDES

(30) Priorität: 19.02.2018 DE 102018103634
(43) Veröffentlichungstag der Anmeldung: 30.12.2020
(73) Patentinhaber: Sartorius Stedim Biotech GmbH, 37079 Göttingen (DE)
(72) Erfinder: PFLANZ, Karl, 37085 Göttingen (DE); LINNE, Holger, 37075 Gottingen (DE); GRAUS, Andreas, 37176 Nörten-Hardenberg (DE); SCHLACK, Stefan, 37083 Göttingen (DE)
(74) Vertreter: Vigand, Philippe
(86) Internationale Anmeldenummer: PCT/EP2019/053324
(87) Internationale Veröffentlichungsnummer: WO 2019/158480

(56) Entgegenhaltungen:
- WO-A1-2016/126891
- DE-A1- 4 219 966
- DE-A1-102011 016 767
- DE-A1-102015 114 766
- US-A- 4 113 627

## Beschreibung

### Gebiet der Erfindung

Die Erfindung betrifft eine Medienfiltrationsvorrichtung mit einem vorkonfektionierten Aufbereitungsbehälter, der einen Zufluss für ein Lösungsmittel und einen Abfluss für eine Lösung aufweist, wobei zwischen dem Zufluss und dem Abfluss eine Aufbereitungskammer mit einem aufzulösenden Medium angeordnet ist, wobei der Aufbereitungsbehälter einen Filter aufweist, und wobei mindestens ein mit dem Zufluss in Verbindung stehender Mischarm mit mindestens einer an seinem freien Ende angeordneten Mischdüse zur Erzeugung eines gerichteten Lösungsmittelstrahles in das aufzulösende Medium in der Aufbereitungskammer hineinragt, wobei der Aufbereitungsbehälter ein Bodenteil und ein Deckelteil aufweist, zwischen denen die Aufbereitungskammer angeordnet ist.

Die Erfindung betrifft weiterhin ein Verfahren zur Medienfiltration mit einer solchen Medienfiltrationsvorrichtung.

### Stand der Technik

Im pharmazeutischen und biopharmazeutischen Bereich, insbesondere im vorklinischen oder klinischen Bereich, sowie in Forschung und Entwicklung ist es häufig notwendig, kleine Volumen von Puffern und Medien aufzubereiten. Die Puffer und Medien werden oft vorkonfektioniert nach vorbestimmten Rezepturen aufbereitet, die einer sorgfältigen und relativ zeitaufwendigen Behandlung durch das Fachpersonal bedürfen. Von besonderer Bedeutung ist es dabei, Stoffgemische aufzubereiten, die auf die vom Endverbraucher benötigten Volumina, Konzentrationen und Komponenten bzw. Medien abgestimmt sind.

Soweit Flüssigkeit, das heißt Lösungsmittel, erst bei Bedarf zugeführt wird, können die Lagerbehälter relativ kleinvolumig sein und können somit leichter transportiert und gelagert werden. Zudem werden die Lagerhaltung und der Transport weiter erleichtert, da in der Regel durch die Trockenlagerung keine Kühlung benötigt wird.

Aus der EP 2 236 437 B1 ist eine Medienfiltrationsvorrichtung mit einem vorkonfektionierten Aufbereitungsbehälter, der einen Zufluss für ein Lösungsmittel und einen Abfluss für eine Lösung aufweist, bekannt. Dabei ist zwischen dem Zufluss und dem Abfluss eine Aufbereitungskammer mit einem aufzulösenden Medium angeordnet, wobei der Aufbereitungsbehälter einen Filter aufweist. Ein mit dem Zufluss in Verbindung stehender Mischarm ragt mit einer an seinem freien Ende angeordneten Mischdüse in die Aufbereitungskammer hinein.

Nachteilig bei der bekannten Medienfiltrationsvorrichtung ist, dass zwischen Zufluss und Aufbereitungskammer eine Vorkammer angeordnet ist, die von dem Filter, der ein antimikrobieller Filter sein kann, unterteilt wird. Dies ist zum einen relativ aufwendig und damit kostenintensiv und zum anderen ist der Filter dem Zufluss und nicht dem Abfluss benachbart angeordnet. Dies ist insbesondere im pharmazeutischen und biopharmazeutischen Bereich nachteilig, da die Sterilität der dem Abfluss vorgelagerten Filtratkammer nicht gegeben ist.

Weiter ist aus der EP 2 244 743 B1 eine Medienfiltrationsvorrichtung mit einem vorkonfektionierten Aufbereitungsbehälter, der eine Zuflussseite aufweist in die über eine einstechbare Kanüle ein Zufluss für ein Lösungsmittel erfolgen kann, und der einen Abfluss für eine Lösung aufweist, bekannt. Dabei ist ebenfalls zwischen dem Zufluss und dem Abfluss eine Aufbereitungskammer mit einem aufzulösenden Medium angeordnet. Das Lösungsmittel wird somit über die in die Aufbereitungskammer eingestochene Kanüle zugeführt. Die Aufbereitungskammer weist zum Abfluss hin einen Filter auf, der vorzugsweise von der Auslassseite beabstandet sein soll.

Nachteilig dabei ist, dass dieser Capsulenaufbau für Lebensmittel nicht für die Anwendung von Zellmedien übernommen werden kann. Bei Zellmedien ist insbesondere von Bedeutung, dass das Medium steril bereitgestellt wird. Eine Sterilisation der Zellmedien ist allerdings meistens nicht möglich, da diese beim Sterilisationsvorgang zerstört oder zu mindestens geschädigt werden, d.h. die Einheit kann nicht als Ganzes sterilisiert werden.

Aus der WO 2017 / 050 745 A1 ist eine Kapsel zur Herstellung eines Getränks bekannt. Die Getränkekapsel umfasst einen becherförmigen Körper, der einen Hohlraum bildet und von einem Deckel verschlossen ist, durch den eine Flüssigkeit in den Hohlraum der Kapsel injiziert werden kann. Eine Trennwand unterteilt den Innenraum der Getränkekapsel in eine kleinere Vorkammer, die unter dem Deckel angeordnet ist, und eine darunter angeordnete, größere Hauptkammer, in der sich die Einzelportionsmenge eines Getränkebestandteils befindet. In der Trennwand befindet sich ein Kanal, der in die Hauptkammer hineinragt und so die beiden Kammern miteinander verbindet und den Durchfluss der injizierten Flüssigkeit von der Vor- in die Hauptkammer erlaubt.

Aus der US 3 592 245 A ist ein Arzneimittelbehälter zum Herstellen einer Arzneimittellösung aus mindestens zwei Komponenten in einem Behälter unter sterilen Bedingungen bekannt. In dem flaschenartigen Behälter ist eine Komponente der Arzneimittellösung vorgelegt. Der Behälter ist mit einem Verschluss versehen, der innen einen Hohlraum aufweist und an den sich eine hohle Durchstechvorrichtung anschließt, die wahlweise in den Behälter hineinragt oder in die entgegengesetzte Richtung, also vom Behälter weg zeigt. Zwischen dem Hohlraum des Verschlusses und dem Hohlraum der Durchstechvorrichtung ist ein Filter angeordnet.

Aus der US 4 475 914 A ist ein Arzneimittelbehälter zum Herstellen einer Arzneimittellösung aus einem eher schwerlöslichen Festbestandteil und einer Flüssigkeit bekannt, der mit einer hohlen Durchstechvorrichtung verbunden ist. Die Durchstechvorrichtung umfasst zwei Kanäle, die optional durch ein Ventil, das mit einem sterilen Filter versehen ist, entlüftet werden können.

Aus der US 2003 / 0 029 763 A1 ist eine Verpackung für einen sterilen Einweg-Spritzenfilter bekannt, die das Verbinden des Spritzenfilters mit einer Spritze erlaubt, ohne dass die Spritze zum Öffnen der Filterverpackung aus der Hand gelegt werden muss. Die Filterverpackung weist dort eine Penetrationsstelle auf, wo sich der Anschluss des Filters für die Spritze befindet. Außerdem ist die Filterverpackung mit vorgeformten Abreißlinien versehen, entlang derer die Verpackung aufgerissen werden kann, was die einfache Entnahme des mit der Spritze verbundenen Spritzenfilters ermöglicht.

Aus der DE 10 2011 112 291 A1 ist eine Vorrichtung zur Filtration einer Flüssigkeitsprobe mit einem mit Druck beaufschlagbaren Probenbehälter zur Aufnahme der Flüssigkeitsprobe und einem Filtervorsatz inklusive Filter, der mit einem Anschluss des Probenbehälters verbindbar ist, bekannt. Der Probenbehälter enthält ein zu einer Anschwemmfiltration geeignetes Filterhilfsmittel. Zudem weist der Filtervorsatz einen seinem Filter vorgelagerten Totraum zur Aufnahme eines sich bildenden Filterkuchens auf.

Aus der DE 10 2011 016 767 A1 ist eine Vorrichtung zur Aufbereitung von pharmazeutischen oder biopharmazeutischen Stoffgemischen bekannt. Die Vorrichtung weist einen Aufbereitungsbehälter mit Mischanordnung auf, in welchem die Ingredenzien enthalten sind. Dem Aufbereitungsbehälter ist ein Sterilfilter vor- oder nachgelagert.

Die US 4,113,527 A und DE 42 19 966 A1 offenbaren Verfahren zur Herstellung eines Filters, wobei ein Flachfilter randseitig dicht zwischen zwei Gehäuseteilen aufgenommen ist.

### Aufgabenstellung

Es ist die Aufgabe der vorliegenden Erfindung, die bekannten Medienfiltrationsvorrichtungen so zu verbessern, dass bei kostengünstiger Ausbildung der Medienfiltrationsvorrichtungen eine Sterilität des Filtrates in einem Filtratraum sichergestellt werden kann, obwohl das aufzulösende Medium, zum Beispiel ein Zellmedium, nicht sterilisierbar ist, das heißt bei einem Sterilisationsvorgang zerstört oder mindestens geschädigt werden würde.

Weitere Aufgabe der vorliegenden Erfindung ist es, ein Verfahren zur Medienfiltration mit einer so verbesserten Medienfiltrationsvorrichtung anzugeben, bei dem eine Sterilität des Filtrates in einem Filtratraum sichergestellt werden kann, obwohl das aufzulösende Medium, zum Beispiel ein Zellmedium, nicht sterilisierbar ist, das heißt bei einem Sterilisationsvorgang zerstört oder mindestens geschädigt werden würde.

### Darlegung der Erfindung

Die Aufgabe bezüglich der Medienfiltrationsvorrichtung wird in Verbindung mit den Merkmalen des Oberbegriffs von Anspruch 1 dadurch gelöst, dass der Filter als ein Sterilfilter ausgebildet ist, dass der Filter auf seiner dem Abfluss zugewandten Filtratseite einen umlaufenden Außenrand aufweist mit dem er auf einem umlaufenden Auflagerand des Bodenteiles aufliegt und mit diesem fest verbunden ist, dass zwischen der

Filtratseite des Filters und dem im Bodenteil angeordneten Abfluss ein sterilisierter Filtratraum gebildet ist und dass die Mischdüse so in der Aufbereitungskammer angeordnet ist, dass sie einen gerichteten Lösungsmittelstrahl erzeugt, der das aufzulösende Medium in einer kreisförmigen Strömung über den Filter bewegt.

Durch den mit dem Zufluss in Verbindung stehenden Mischarm und der an seinem freien Ende angeordneten Mischdüse in der Aufbereitungskammer wird eine Vermischung des aufzulösenden Mediums mit dem Lösungsmittel ermöglicht. Unter Mischarm wird ein fixer Zulauf mit einem Zulaufkanal, der mit dem Zulauf verbunden ist, verstanden, dessen freies Ende in der Aufbereitungskammer endet und eine Mischdüse aufweist, über die der Aufbereitungskammer ein gerichteter Lösungsmittelstrahl zugeführt werden kann.

Die Ausbildung des Filters als Sterilfilter stellt sicher, dass die filtrierte Lösung steril ist. Der umlaufende Außenrand auf der Filtratseite des Filters, mit dem der Filter auf einem umlaufenden Auflagerand des Bodenteiles fest verbunden ist, ermöglicht eine separate Sterilisation des Bodenteiles mit Filter und Filtratraum. Dem Fachmann ist klar, dass zur Sicherstellung der Sterilität des Filtratraumes, dieser nach außen hin versiegelt sein muss, also nicht offen ist, wie in den Figuren dargestellt. Dies kann beispielsweise über einen Deckel, einen angeschlossen Sterilkonnektor oder ein Siegel (Membran/Folie zum Abziehen) erfolgen.

So kann auf eine Sterilisation des Mediums verzichtet und gleichwohl die Sterilität der Lösung, also des Filtrats, sichergestellt werden. Das aufzulösende Medium ist auf der Unfiltratseite des Filters in der Aufbereitungskammer angeordnet. Durch die Ausbildung des Filters als Sterilfilter kann die Sterilität der Lösung des aufgelösten filtrierten Mediums relativ einfach und kostengünstig sichergestellt werden. Mit der erfindungsgemäßen Medienfiltrationsvorrichtung können die hohen Anforderungen der Bioprozess-Technologie insbesondere in Hinblick auf Sterilitätsaspekte und Sicherheit gegen unerwünschten Austritt von Stoffen erfüllt werden, die in diesem Bereich von besonderer Bedeutung sind.

Bevorzugte Ausführungsformen sind Gegenstand der abhängigen Ansprüche.

Nach einer bevorzugten Ausführungsform der Erfindung ist in der Aufbereitungskammer ein von dem Lösungsmittel nicht lösliches Rührgranulat angeordnet.

Durch das in der Aufbereitungskammer angeordnete Rührgranulat, welches von dem Lösungsmittel nicht lösbar ist, wird das aus der Mischdüse austretenden Lösungsmittel zusammen mit dem aufzulösenden Medium verwirbelt und verhindert zuverlässig eine Verblockung des Filters. Während das Medium in dem zugeführten Lösungsmittel aufgelöst und als filtrierte Lösung über den Abfluss abgeleitet wird, verbleibt das Rührgranulat in der Aufbereitungskammer.

Erfindungsgemäß ist die Mischdüse so in der Aufbereitungskammer angeordnet, dass sie einen gerichteten Lösungsmittelstrahl erzeugt, der das aufzulösende Medium in einer kreisförmigen Strömung über den Filter bewegt. Eine turbulente Strömung führt dabei zu einer schnellen und gründlichen Durchmischung und verkürzt die Lösungszeit.

Nach einer weiteren bevorzugten Ausführungsform der Erfindung weist das Bodenteil ein zum Abfluss leitendes Kanalsystem auf, welches zur Filtratseite des Filters hin offen ist.

Durch das zur Filtratseite des Filters hin offene Kanalsystem, welches in den Abfluss mündet, wird das Filtrat relativ gleichmäßig über die gesamte Filterfläche, die damit entsprechend genutzt werden kann, abgeleitet.

Gemäß einer bevorzugten Ausführungsform der Erfindung weist der Aufbereitungsbehälter eine Entlüftungsvorrichtung auf, deren mindestens eine Entlüftungsöffnung von einem hydrophoben Filter abgedeckt ist.

Zur Erstellung einer exakten Konzentration der herzustellenden Lösung ist es von besonderer Bedeutung, neben der zur Verfügungsstellung einer exakten Menge an trockenem Medium auch eine exakte Volumendosierung einzuhalten. Durch die Entlüftungsvorrichtung wird eine technisch vereinfachte Lösung, die eine der Medienfiltrationseinheit nachgeordnete Dosier- oder Ventileinrichtung vermeidet, erreicht, durch die zuverlässig auszuschließen ist, dass durch die Zugabe von Lösemittel in die Medienfiltrationsvorrichtung komprimierte Luftkissen entstehen, die nach dem Stopp von zugeführtem Lösungsmittel zu einem Nachlauf und damit unkorrekter Flüssigkeitsdosierung führen würden. Der hydrophobe Filter verhindert zudem zuverlässig, dass auch Lösungsmittel oder rekonstituierte Medien über die Entlüftungsvorrichtung entweichen können.

Gemäß einer bevorzugten Ausführungsform der Erfindung ist der Zufluss an einem Deckelteil des Aufbereitungsbehälters angeordnet. Auch kann das Deckelteil die oben beschriebene Entlüftungsvorrichtung aufweisen, über die die von dem Lösungsmittel verdrängte Luft entweichen kann. Die Entlüftungsvorrichtung weist dabei die mindestens eine Entlüftungsöffnung auf, die an der der Aufbereitungskammer zugewandten Innenfläche des Deckelteiles von dem hydrophoben Filter abgedeckt ist.

Nach einer bevorzugten Ausführungsform weist das Deckelteil ein offenes Kanalsystem auf, über das aus der Aufbereitungskammer abzuführende Luft zu dem hydrophoben Filter hingeleitet wird.

Nach einer weiteren bevorzugten Ausführungsform der Erfindung ist der als Sterilfilter ausgebildete Filter mehrlagig ausgebildet. Bevorzugt ist dabei mindestens eine Lage des Filters eine poröse Membran. Alternativ kann auch ein mehrlagiges Vlies verwendet werden. Denkbar sind auch andere, dem Fachmann bekannte Schichten, die Filtereigenschaften aufweisen.

Sterilfilter haben bevorzugt mittlere Porengrößen im Bereich von 0,1 - 8 µm. Mittlere Porengrößen werden beispielsweise mit dem nachfolgenden Verfahren zur Bestimmung der mittleren Porengröße bestimmt:
Es wird die Kapillarfluss-Porosimetrie verwendet. Die Kapillarfluss-Porosimetrie ist eine Gas/Flüssigkeits-Porosimetrie, bei der die differentiellen Gasdrücke und Flussraten durch eine Membranprobe zuerst im feuchten und anschließend im trockenen Zustand gemessen werden.

Die Membranprobe wird vor der Messung mit benetzender Flüssigkeit so in Kontakt gebracht, dass sämtliche vorhandenen Poren mit dieser Flüssigkeit gefüllt sind. Nach dem Füllen der Poren und dem Einbringen der Probe ist die Messzelle zu verschließen und die Messung zu starten. Der Gasdruck wird nach dem Start der Messung automatisch und schrittweise erhöht und die dem anliegenden Druck entsprechenden Porendurchmesser werden durch den Gasdruck entleert. Dies erfolgt solange, bis der relevante Porenbereich erfasst wurde, das heißt bis auch die kleinsten im Messbereich vorhandenen Poren von Flüssigkeit befreit sind. Danach wird der Druck wieder abgesenkt und die Messung an der nun trockenen Probe automatisch wiederholt. Aus der Differenz beider Druck-Flussrate Kurven wird die Porengrößenverteilung über die Young-Laplace-Gleichung berechnet (siehe Shrestha, Aabhash, "Characterization of porous membranes via porometry" (2012), Mechanical Engineering Graduate Theses & Dissertations, Paper 38).

Nach einer bevorzugten Ausführungsform der Erfindung sind zwei mit dem Zufluss in Verbindung stehende Mischarme mit jeweils mindestens einer an ihren freien Enden angeordneten Mischdüse in der Aufbereitungskammer angeordnet. Vorteilhaft sind dabei in Bezug auf eine Längsachse des Aufbereitungsbehälters die Mischdüse oder die Mischdüsen außermittig angeordnet. Die außermittige Anordnung der Mischdüsen führt zu einer besseren Verwirbelung und damit zu einer schnelleren Durchmischung des Lösungsmittels mit dem aufzulösenden Medium und entsprechend zu einer schnelleren Auflösung des Mediums. Grundsätzlich können aber auch drei oder mehr mit dem Zufluss in Verbindung stehende Mischarme mit jeweils mindestens einer an ihren freien Enden angeordneten Mischdüse in der Aufbereitungskammer angeordnet sein.

Nach einer weiteren bevorzugten Ausführungsform der Erfindung ragt der Zufluss zentrisch zur Längsachse des Aufbereitungsbehälters in die Aufbereitungskammer hinein und geht in die bspw. zwei Mischarme über, die mit ihrer Mischarmachse jeweils gegenüber der Längsachse um einen Spreizwinkel zwischen 15° und 90°, bspw. 60°, abgespreizt sind. Bevorzugt spannen die beiden Mischarme dabei eine vertikale Ebene auf, zu der die Mischdüsen orthogonal und in einander entgegengesetzten Sprührichtungen ausgerichtet sind. Hierdurch wird eine turbulente Strömung des Lösungsmittels mit dem aufzulösenden Medium und dem Rührgranulat sichergestellt und der Mischvorgang zeitlich verkürzt.

Das aufzulösende Medium kann ein Pulver oder Granulat sein. Auch kann das aufzulösende Medium Zusatzstoffe enthalten.

Die Aufgabe bezüglich des Verfahrens zur Medienfiltration mit einer solchen Medienfiltrationsvorrichtung wird in Verbindung mit den Merkmalen des Oberbegriffs von Anspruch 12 dadurch gelöst, dass der Zufluss der Medienfiltrationsvorrichtung mit einem Vorratsbehälter verbunden wird, aus dem das Lösungsmittel über ein Regelventil, das von einer Steuereinheit gesteuert wird, dem Aufbereitungsbehälter zugeführt wird, und dass der Abfluss der Medienfiltrationsvorrichtung mit einem Aufnahmebehälter verbunden wird, dem die filtrierte Lösung zugeführt wird.

In einer bevorzugten Weiterentwicklung des Verfahrens werden zum Vorkonfektionieren des Aufbereitungsbehälters folgende Schritte durchgeführt:
a) Bereitstellen des Deckelteils und des Bodenteils mit dem sterilisierten Filtratraum,
b) Einbringen des aufzulösenden Mediums in die Aufbereitungskammer und
c) Zusammenfügen von Deckelteil und Bodenteil.

Dadurch, dass das Bodenteil mit Abfluss, Filter und Filtratraum eine sterilisierbare Einheit bildet, die ohne Deckelteil und ohne aufzulösendes Medium sterilisiert ist, kann problemlos ein sterilisierter, das heißt steriler, Filtratraum gebildet werden. Das Bodenteil kann separat verpackt oder zusammengesteckt mit dem Deckelteil zum Vorkonfektionieren geliefert werden. Das aufzulösende Medium wird in die einseitig offene Aufbereitungskammer eingebracht und anschließend werden Deckelteil und Bodenteil zusammengefügt. Das Zusammenfügen kann beispielsweise durch Kleben oder durch Laserschweißen oder durch Ultraschallschweißen erfolgen.

Im Schritt b) kann zusätzlich das von dem Lösungsmittel nicht lösliche Rührgranulat eingebracht werden.

Die vorkonfektionierte Medienfiltrationsvorrichtung kann verpackt und problemlos gelagert und transportiert werden.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: Eine Seitenansicht im Schnitt einer Medienfiltrationsvorrichtung;
- Figur 2:: das Bodenteil von Figur 1 mit Filter und sterilisiertem Filtratraum;
- Figur 3:: das Bodenteil mit sterilisiertem Filtratraum und aufgesetztem Deckelteil von Figur 1 noch ohne Medium und ohne Granulat;
- Figur 4:: eine Seitenansicht im Schnitt einer weiteren Medienfiltrationsvorrichtung;
- Figur 5:: das Bodenteil von Figur 4 mit Filter und sterilisiertem Filtratraum;

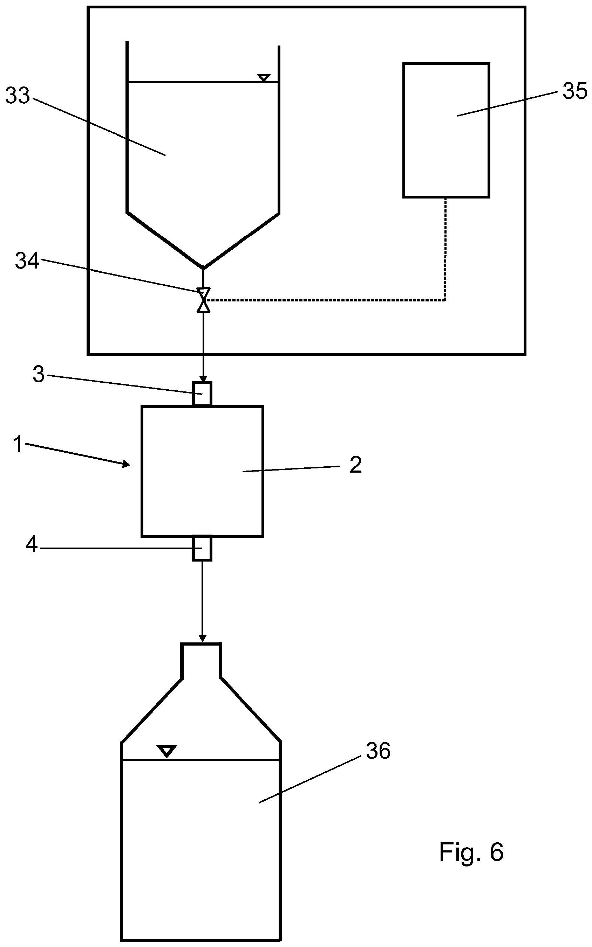

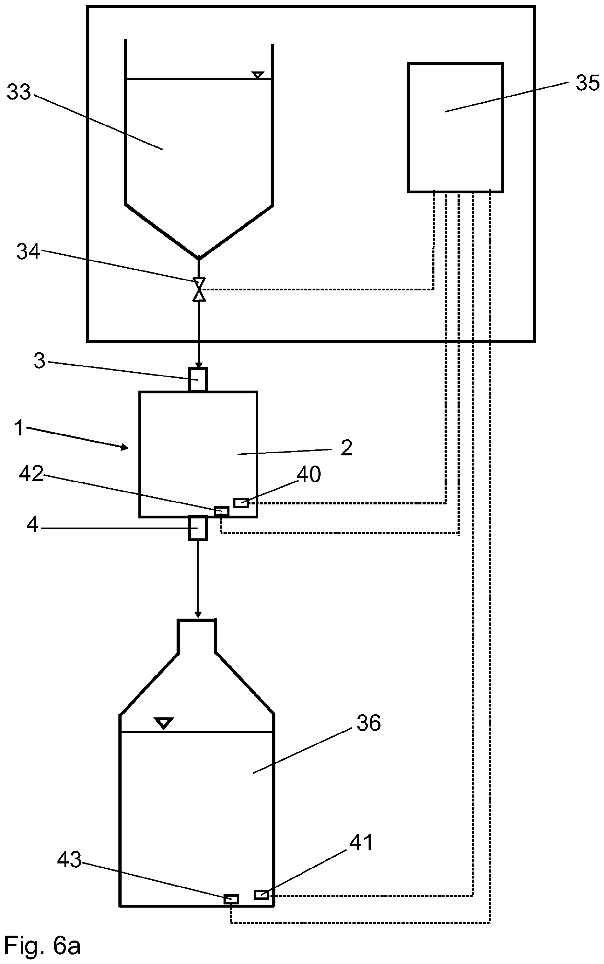

- Figur 6:: eine schematische Darstellung einer Medienfiltrationsvorrichtung mit einem vorgelagerten, gesteuerten Lösungsmittelbehälter und einem nachgeschalteten Sammelgefäß für die filtrierte Lösung und
- Figur 6a:: eine weitere schematische Darstellung einer Medienfiltrationsvorrichtung gemäß Fig. 6.

### Beschreibung bevorzugter Ausführungsformen

Eine Medienfiltrationsvorrichtung 1 besteht im Wesentlichen aus einem Aufbereitungsbehälter 2, einem Zufluss 3, einem Abfluss 4, einer Aufbereitungskammer 5 und zwei Mischarmen 6, 7.

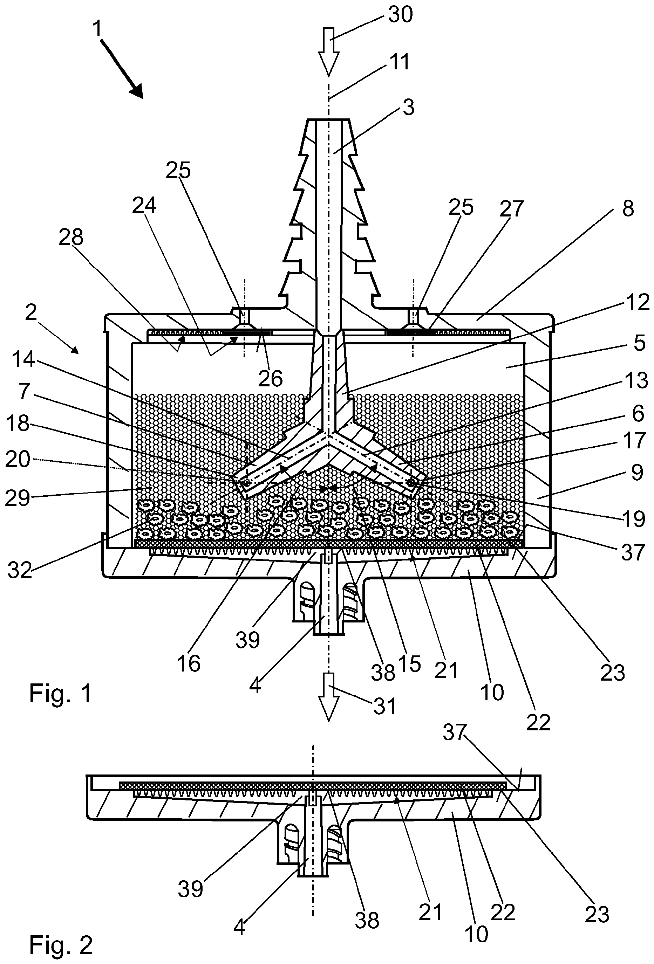

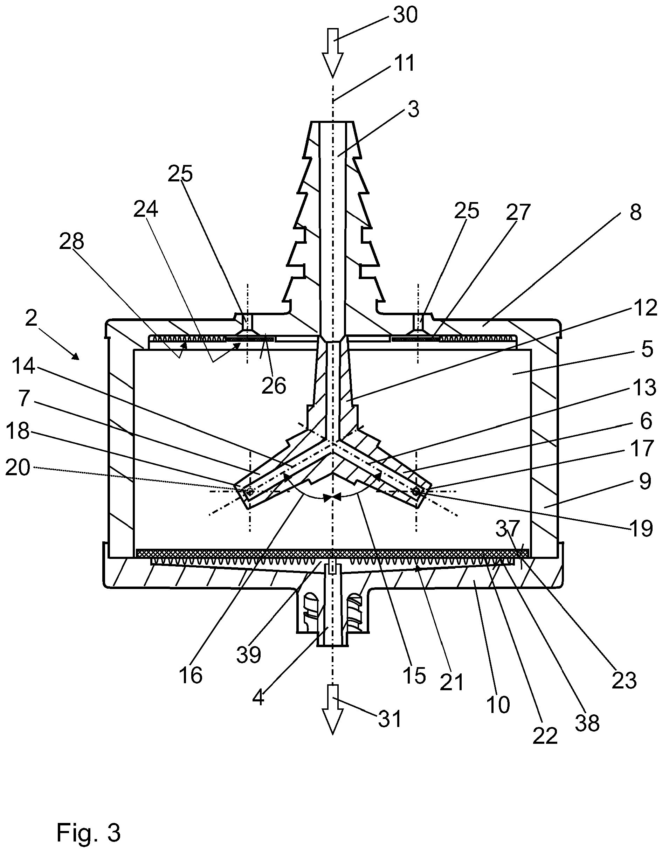

Der Aufbereitungsbehälter 2 besteht aus einem Deckelteil 8 mit dem Zufluss 3, der im Ausführungsbeispiel der Figuren 1 bis 4 als Schlauchanschlussteil ausgebildet ist. An das Deckelteil 8 ist entsprechend den Figuren 1 bis 3 eine ringförmige Behälterwandung 9 angeformt. Die Behälterwandung 9 ist in vertikaler Richtung an ihrem unteren Ende mit einem Bodenteil 10, das den Abfluss 4 aufweist verbunden. Das Deckelteil 8, die Behälterwandung 9 und das Bodenteil 10 umgrenzen die Aufbereitungskammer 5.

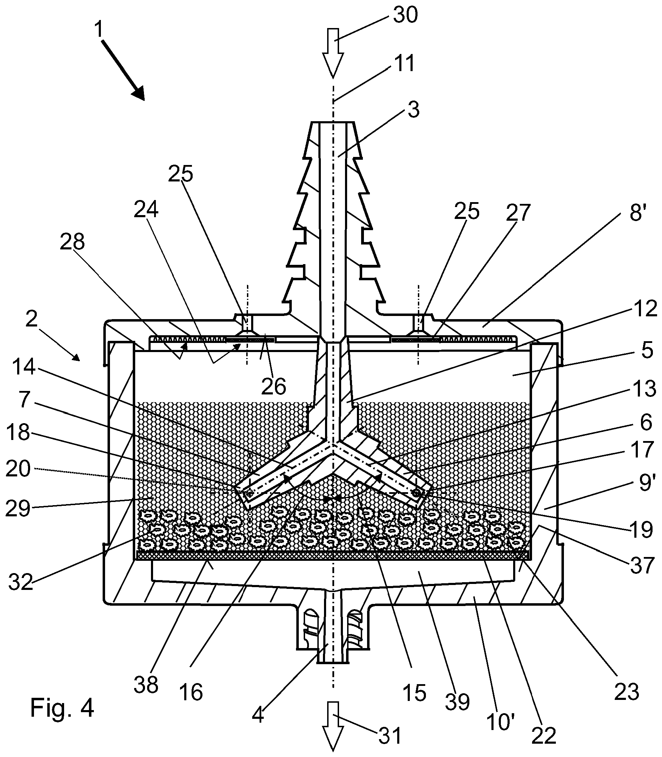

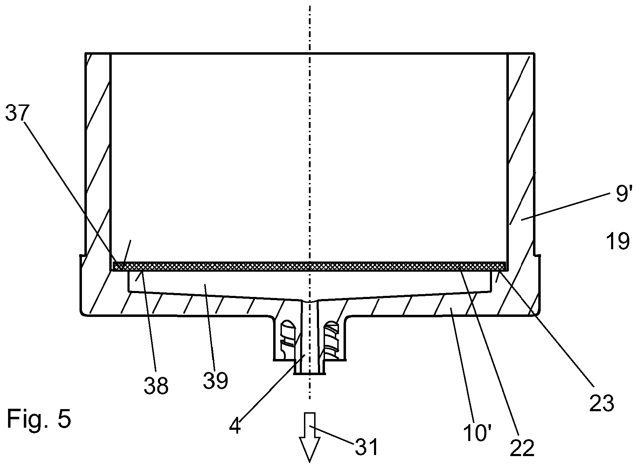

Entsprechend den Figuren 4 und 5 ist die ringförmige Behälterwandung 9' an dem Bodenteil 10' angeformt. Die Behälterwandung 9' ist in vertikaler Richtung an ihrem oberen Ende mit einem Deckelteil 8', das den Zufluss 3 aufweist, verbunden. Das Deckelteil 8', die Behälterwandung 9' und das Bodenteil 10' umgrenzen die Aufbereitungskammer 5.

Der Zufluss 3 ragt zentrisch zur Längsachse 11 des Aufbereitungsbehälters 2 mit einem Trägerstück 12 in die Aufbereitungskammer 5 hinein. Am Ende des Trägerstückes 12 geht das Trägerstück 12 in die Mischarme 6, 7 über. Der erste Mischarm weist eine erste Mischarmachse 13 und der zweite Mischarm 7 weist eine zweite Mischarmachse 14 auf. Die Mischarmachsen 13, 14 sind jeweils gegenüber der Längsachse 11, die zugleich die Längsachse des zentrischen Trägerstückes 12 bildet, um einen Spreizwinkel 15, 16 abgespreizt. Der Spreizwinkel 15, 16 sollte zweckmäßigerweise zwischen 15° und 90° betragen. In den Ausführungsbeispielen beträgt der Spreizwinkel 15, 16 für beide Mischarmachsen 13, 14 jeweils 60°. An ihren freien Enden 17, 18 weisen die Mischarme 6, 7 jeweils eine seitliche Mischdüse 19, 20 auf. Dabei spannen die Mischarme 6, 7 eine vertikale Ebene auf, zu der die Mischdüsen 19, 20 orthogonal und in entgegengesetzte Sprührichtungen ausgerichtet sind.

Zur Aufbereitungskammer 5 hin weist das Bodenteil 10, 10' ein zum Abfluss 4 leitendes Kanalsystem 21 auf, das von einem Filter 22 abgedeckt ist. Der Filter 22, der als ein Sterilfilter ausgebildet ist, wird von dem Bodenteil 10, 10' mit dem Kanalsystem 21 getragen, wobei der Filter 22 auf seiner dem Abfluss 4 zugewandten Filtratseite 38 einen umlaufenden Außenrand 23 aufweist, mit dem er auf einem umlaufenden Auflagerand 37 des Bodenteiles 10, 10' des Aufbereitungsbehälters 2 aufliegt und mit diesem fest verbunden ist.

Zwischen der Filtratseite 38 des Filters 22 und dem im Bodenteil 10, 10' angeordneten Abfluss 4 wird durch Sterilisation des Bodenteiles 10, 10' mit dem Filter 22 ein sterilisierter Filtratraum 39 gebildet. Aus dem Filter 22 austretendes Filtrat wird somit über das Kanalsystem 21 dem Abfluss 4 als Lösung 31 zugeleitet, wobei die Sterilität der Lösung 31 sichergestellt ist.

Das Deckelteil 8, 8' weist eine Entlüftungsvorrichtung 24 auf, deren Entlüftungsöffnungen 25 an der der Aufbereitungskammer 5 zugewandten Innenfläche 26 des Deckelteiles 8, 8' von einem in den Ausführungsbeispielen ringförmigen hydrophoben Filter 27 abgedeckt sind. Konzentrisch zum hydrophoben Filter 27 weist das Deckelteil 8, 8' ein offenes Kanalsystem 28 auf, über das aus der Aufbereitungskammer 5 abzuführende Luft zu dem hydrophoben Filter 27 hingeleitet wird.

In der Aufbereitungskammer 5 ist ein Medium 29 angeordnet, das von einem über den Zufluss 3 zuzuführenden Lösungsmittel 30 aufgelöst und als Lösung 31 über den Abfluss 4 abgeleitet wird. In der Aufbereitungskammer 5 ist ein von dem Lösungsmittel 30 nicht auflösbares Rührgranulat 32 angeordnet.

Zur Medienfiltration wird der Zufluss 3 der Medienfiltrationsvorrichtung 1 mit einem Vorratsbehälter 33 verbunden, aus dem das Lösungsmittel 30 über ein Regelventil 34, das von einer Steuereinheit 35 gesteuert wird, dem Aufbereitungsbehälter 2 zugeführt wird. Der Abfluss 4 der Medienfiltrationsvorrichtung 1 wird mit einem Aufnahmebehälter 36 verbunden dem die filtrierte Lösung 31 zugeführt wird.

Unter dem Vorratsbehälter 33 soll auch ein Fluidaufbereitungssystem und, soweit es sich bei dem Fluid (Lösungsmittel 30) um Wasser handelt, soll auch ein Wasseraufbereitungssystem für analysenreines Wasser, wie es beispielsweise von der Sartorius AG in Göttingen unter der Bezeichnung Arium^{®} vertrieben wird, verstanden werden.

Zum Vorkonfektionieren der Medienfiltrationsvorrichtung 1 können das Deckelteil 8, 8' und das Bodenteil 10, 10' mit dem fest angeordneten Filter 22 lose zusammengesteckt, beispielsweise steril verpackt, geliefert werden. Das heißt, mindestens das Bodenteil 10, 10' mit Filter 22 und dem Filtratraum 39 muss steril sein oder sterilisiert werden.

Das Deckelteil 8, 8' wird (soweit zusammengesteckt) vom Bodenteil 10, 10' mit dem sterilisierten Filtratraum 39 abgehoben und das aufzulösende Medium 29 sowie gegebenenfalls das Rührgranulat 32 werden in die Aufbereitungskammer 5 eingebracht. Anschließend wird das Deckelteil 8, 8' wieder auf das Bodenteil 10, 10' aufgesetzt und zusammengefügt. Das Deckelteil 8, 8' und das Bodenteil 10, 10' können beispielsweise durch Laserschweißen, Ultraschallschweißen oder durch Kleben zusammengefügt werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Die Merkmale bevorzugter Ausführungsformen sind selbstverständlich auch untereinander kombinierbar.

Insbesondere kann in einer weiteren bevorzugten Ausführungsform der Erfindung, der Aufbereitungsbehälter 2 und/oder der Aufnahmebehälter 36 mindestens einen Sensor 40, 41 zur Bestimmung eines Parameters der aufbereiteten Lösung 31 aufweisen. Dabei können der pH-Wert, die Temperatur, die Leitfähigkeit oder andere Parameter gemessen und gegebenenfalls über die Steuer- und Kontrolleinheit 35 geregelt werden. Auch ist es möglich, einen Biochip 42, 43 beispielsweise zur Sterilitätsbestimmung, im Aufbereitungsbehälter 2 und/oder Aufnahmebehälter 36 anzuordnen.

Der Sensor 40 kann den vollständigen Übertrag des aufzulösenden Mediums 29 über den Sterilfilter 22 überwachen. Dabei kann der Sensor 40 in der unsterilen Aufbereitungskammer 5 angeordnet sein und mit der Steuereinheit 35 kommunizieren. Der Sensor 40 kann in Verbindung mit der Steuereinheit 35 die Leitfähigkeit in der Aufbereitungskammer 2 verfolgen und über das Unterschreiten eines Schwellwerts den vollständigen Transfer des Mediums 29 bestätigen.

### Bezugszeichenliste

- 1: Medienfiltrationsvorrichtung
- 2: Aufbereitungsbehälter
- 3: Zufluss
- 4: Abfluss
- 5: Aufbereitungskammer
- 6: (erster) Mischarm
- 7: (zweiter) Mischarm
- 8, 8': Deckelteil von 2
- 9, 9': Behälterwandung
- 10, 10': Bodenteil von 2
- 11: Längsachse von 2
- 12: Trägerstück von 3
- 13: Mischarmachse von 6
- 14: Mischarmachse von 7
- 15: Spreizwinkel von 13
- 16: Spreizwinkel von 14
- 17: freies Ende von 6
- 18: freies Ende von 7
- 19: Mischdüse von 6
- 20: Mischdüse von 7
- 21: Kanalsystem von 10
- 22: Filter
- 23: Außenrand von 22
- 24: Entlüftungsvorrichtung von 8
- 25: Entlüftungsöffnung von 24
- 26: Innenfläche von 8
- 27: Hydrophober Filter
- 28: Kanalsystem von 8
- 29: Medium
- 30: Lösungsmittel
- 31: Lösung
- 32: Rührgranulat
- 33: Vorratsbehälter
- 34: Regelventil
- 35: Steuereinheit
- 36: Aufnahmebehälter
- 37: Auflagerand von 10, 10'
- 38: Filtratseite von 22
- 39: Filtratraum
- 40: Sensor
- 41: Sensor
- 42: Biochip
- 43: Biochip

## Patentansprüche

1. Medienfiltrationsvorrichtung (1) mit einem vorkonfektionierten Aufbereitungsbehälter (2), der einen Zufluss (3) für ein Lösungsmittel (30) und einen Abfluss (4) für eine Lösung (31) aufweist, wobei zwischen dem Zufluss (3) und dem Abfluss (4) eine Aufbereitungskammer (5) mit einem aufzulösenden Medium (29) angeordnet ist, wobei der Aufbereitungsbehälter (2) einen Filter (22) aufweist, und wobei mindestens ein mit dem Zufluss (3) in Verbindung stehender fixer Mischarm (6, 7) mit mindestens einer an seinem freien Ende (17, 18) angeordneten Mischdüse (19, 20) zur Erzeugung eines gerichteten Lösungsmittelstrahles in das aufzulösende Medium (29) in der Aufbereitungskammer (5) hineinragt, wobei der Aufbereitungsbehälter (2) ein Bodenteil (10) und ein Deckelteil (8) aufweist, zwischen denen die Aufbereitungskammer (5) angeordnet ist,
**dadurch gekennzeichnet,**
**dass** der Filter (22) als ein Sterilfilter ausgebildet ist,
**dass** der Filter (22) auf seiner dem Abfluss (4) zugewandten Filtratseite einen umlaufenden Außenrand (23) aufweist, mit dem er auf einem umlaufenden Auflagerand (37) des Bodenteils (10) aufliegt und mit diesem fest verbunden ist, dass zwischen der Filtratseite (38) des Filters (22) und dem im Bodenteil (10) angeordneten Abfluss (4) ein sterilisierter Filtratraum (39) gebildet ist und dass die Mischdüse (19, 20) so in der Aufbereitungskammer (5) angeordnet ist, dass sie einen gerichteten Lösungsmittelstrahl erzeugt, der das aufzulösende Medium (29) in einer kreisförmigen Strömung über den Filter (22) bewegt.

2. Medienfiltrationsvorrichtung (1) nach Anspruch 1,
**dadurch gekennzeichnet,**
**dass** in der Aufbereitungskammer (5) ein von dem Lösungsmittel (30) nicht lösliches Rührgranulat (32) angeordnet ist.

3. Medienfiltrationsvorrichtung (1) nach einem der Ansprüche 1 bis 2,
**dadurch gekennzeichnet,**
**dass** das Bodenteil (10) ein zum Abfluss (4) leitendes Kanalsystem (21) aufweist, welches zur Filtratseite des Filters (22) hin offen ist.

4. Medienfiltrationsvorrichtung (1) nach einem der Ansprüche 1 bis 3,
**dadurch gekennzeichnet,**
**dass** der Aufbereitungsbehälter (2) eine Entlüftungsvorrichtung (24) aufweist, deren mindestens eine Entlüftungsöffnung (25) von einem hydrophoben Filter (27) abgedeckt ist.

5. Medienfiltrationsvorrichtung (1) nach Anspruch 4,
**dadurch gekennzeichnet,**
**dass** der Zufluss (3) an einem Deckelteil (8) des Aufbereitungsbehälters (2) angeordnet ist und
**dass** das Deckelteil (8) die Entlüftungsvorrichtung (24) aufweist, deren mindestens eine Entlüftungsöffnung (25) an der der Aufbereitungskammer (5) zugewandten Innenfläche des Deckelteiles (8) von dem hydrophoben Filter (27) abgedeckt ist.

6. Medienfiltrationsvorrichtung (1) nach Anspruch 5,
**dadurch gekennzeichnet,**
**dass** das Deckelteil (8) ein offenes Kanalsystem (28) aufweist, über das aus der Aufbereitungskammer (5) abzuführende Luft zu dem hydrophoben Filter (27) hingeleitet wird.

7. Medienfiltrationsvorrichtung (1) nach einem der Ansprüche 1 bis 6,
**dadurch gekennzeichnet,**
**dass** der Filter (22) mehrlagig ausgebildet ist.

8. Medienfiltrationsvorrichtung (1) nach einem der Ansprüche 1 bis 7,
**dadurch gekennzeichnet,**
**dass** zwei mit dem Zufluss (3) in Verbindung stehende Mischarme (6, 7) mit jeweils mindestens einer an ihren freien Enden (17, 18) angeordneten Mischdüse (19, 20) in der Aufbereitungskammer (5) angeordnet sind.

9. Medienfiltrationsvorrichtung (1) nach einem der Ansprüche 1 bis 8,
**dadurch gekennzeichnet,**
**dass** in Bezug auf eine Längsachse (11) des Aufbereitungsbehälters (2) die Mischdüse (19) oder die Mischdüsen (19, 20) außermittig angeordnet sind.

10. Medienfiltrationsvorrichtung (1) nach Anspruch 8 oder 9,
**dadurch gekennzeichnet,**
**dass** der Zufluss (3) zentrisch zur Längsachse (11) des Aufbereitungsbehälters (2) in die Aufbereitungskammer (5) hineinragt und in die Mischarme (6, 7) übergeht, die mit ihrer Mischarmachse (13, 14) jeweils gegenüber der Längsachse (11) um einen Spreizwinkel (15, 16) zwischen 15° und 90° abgespreizt sind.

11. Medienfiltrationsvorrichtung (1) nach Anspruch 10,
**dadurch gekennzeichnet,**
**dass** die Mischarme (6, 7) eine vertikale Ebene aufspannen zu der die Mischdüsen (19, 20) orthogonal und in entgegengesetzte Sprührichtungen ausgerichtet sind.

12. Verfahren zur Medienfiltration mit einer Medienfiltrationsvorrichtung (1) nach einem der Ansprüche 1 bis 11,
**dadurch gekennzeichnet,**
**dass** der Zufluss (3) der Medienfiltrationsvorrichtung (1) mit einem Vorratsbehälter (33) verbunden wird, aus dem das Lösungsmittel (30) über ein Regelventil (34), das von einer Steuereinheit (35) gesteuert wird, dem Aufbereitungsbehälter (2) zugeführt wird, und dass der Abfluss (4) der Medienfiltrationsvorrichtung (1) mit einem Aufnahmebehälter (36) verbunden wird, dem die filtrierte Lösung (31) zugeführt wird.

13. Verfahren nach Anspruch 12,
**dadurch gekennzeichnet,**
**dass** zum Vorkonfektionieren des Aufbereitungsbehälters (2) folgende Schritte durchgeführt werden:
a) Bereitstellen des Deckelteils (8) und des Bodenteils (10) mit dem sterilisierten Filtratraum (39),
b) Einbringen des aufzulösenden Mediums (29) in die Aufbereitungskammer (5) und
c) Zusammenfügen von Deckelteil (8) und Bodenteil (10).

14. Verfahren nach Anspruch 13,
**dadurch gekennzeichnet,**
**dass** im Schritt b) zusätzlich das von dem Lösungsmittel (30) nicht lösliche Rührgranulat (32) eingebracht wird.

## Claims

1. A media filtration device (1) with a prefabricated preparation container (2) which has an inflow (3) for a solvent (30) and an outflow (4) for a solution (31), wherein a preparation chamber (5) with a medium (29) to be dissolved is arranged between the inflow (3) and the outflow (4), wherein the preparation container (2) has a filter (22), and wherein at least one fixed mixing arm (6, 7) connected to the inflow (3) protrudes into the medium (29) to be dissolved with at least one mixing nozzle (19, 20) arranged on its free end (17, 18) for generating a solvent jet into the medium (29) to be dissolved in the preparation chamber (5), wherein the preparation container (2) has a base part (10) and a cover part (8), between which the preparation chamber (5) is arranged,
**characterized**
**in that** the filter (22) is formed as a sterile filter,
**in that** the filter (22) has a circumferential outer edge (23) on its filtrate side facing the outflow (4), with which it rests on a circumferential rest edge (37) of the base part (10) and to which it is firmly connected,
**in that** a sterilized filtrate space (39) is formed between the filtrate side (38) of the filter (22) and the outflow (4) arranged in the base part (10) and in that the mixing nozzle (19, 20) is arranged in the preparation chamber (5) so that it generates a directed solvent jet which moves the medium (29) to be dissolved in a circular flow over the filter (22).

2. The media filtration device (1) according to claim 1,
**characterized**
**in that** agitation granules (32) that cannot be dissolved from the solvent (30) are arranged in the preparation chamber (5) .

3. The media filtration device (1) according to any of claims 1 to 2,
**characterized**
**in that** the base part (10) has a channel system (21) conducting to the outflow (4), which is open toward the filtrate side of the filter (22).

4. The media filtration device (1) according to any of claims 1 to 3,
**characterized**
**in that** the preparation container (2) has a ventilation device (24) whose at least one ventilation opening (25) is covered by a hydrophobic filter (27).

5. The media filtration device (1) according to claim 4,
**characterized**
**in that** the inflow (3) is arranged on a cover part (8) of the preparation container (2) and
**in that** the cover part (8) has the ventilation device (24), whose at least one ventilation opening (25) is covered by a hydrophobic filter (27) on the inner surface of the cover part (8) facing the preparation chamber (5).

6. The media filtration device (1) according to claim 5,
**characterized**
**in that** the cover part (8) has an open channel system (28), via which the air to be discharged from the preparation chamber (5) is conducted to the hydrophobic filter (27).

7. The media filtration device (1) according to any of claims 1 to 6,
**characterized**
**in that** the filter (22) is formed in multiple plies.

8. The media filtration device (1) according to any of claims 1 to 7,
**characterized**
**in that** two mixing arms (6, 7) connected to the inflow (3) with at least one respective mixing nozzle (19, 20) on their free ends (17, 18) are arranged in the preparation chamber (5).

9. The media filtration device (1) according to any of claims 1 to 8,
**characterized**
**in that** the mixing nozzle (19) or the mixing nozzles (19, 20) are arranged eccentrically with respect to a longitudinal axis (11) of the preparation container (2).

10. The media filtration device (1) according to claim 8 or 9,
**characterized**
**in that** the inflow (3) protrudes into the preparation chamber (5) centrally to the longitudinal axis (11) of the preparation container (2) and merges into the mixing arms (6, 7), which with their mixing arm axes (13, 14) are respectively spread with respect to the longitudinal axis (11) by a spread angle (15, 16) of between 15° and 90°.

11. The media filtration device (1) according to claim 10,
**characterized**
**in that** the mixing arms (6, 7) span a vertical plane to which the mixing nozzles (19, 20) are aligned orthogonally and in opposite spraying directions.

12. A method for media filtration with a media filtration device (1) according to any of claims 1 to 11,
**characterized**
**in that** the inflow (3) of the media filtration device (1) is connected to a storage container (33), from which the solvent (30) is supplied to the preparation container (2) via a control valve (34), which is controlled by a controller (35), and in that the outflow (4) of the media filtration device (1) is connected to a receiving container (36), to which the filtered solution (31) is supplied.

13. The method according to claim 12,
**characterized**
**in that** the following steps are carried out for prefabrication of the preparation container (2):
a) providing the cover part (8) and the base part (10) with the sterilized filtrate space (39),
b) introducing the medium (29) to be dissolved into the preparation chamber (5) and
c) joining together the cover part (8) and the base part (10) .

14. The method according to claim 13,
**characterized**
**in that** in step b) non-soluble agitation granules (32) are additionally introduced into the solvent (30).

## Revendications

1. Dispositif de filtration de milieux (1) avec un récipient de préparation (2) pré-confectionné qui présente une admission (3) pour un solvant (30) et une évacuation (4) pour une solution (31), dans lequel une chambre de préparation (5) avec un milieu (29) à dissoudre est agencée entre l'admission (3) et l'évacuation (4), dans lequel le récipient de préparation (2) présente un filtre (22), et dans lequel au moins un bras mélangeur (6, 7) fixe relié à l'admission (3) pénètre, avec au moins une buse de mélange (19, 20) agencée à son extrémité libre (17, 18), dans le milieu (29) à dissoudre dans la chambre de préparation (5) pour produire un faisceau de solvant orienté, dans lequel le récipient de préparation (2) présente une partie de fond (10) et une partie de couvercle (8), entre lesquelles la chambre de préparation (5) est agencée,
**caractérisé en ce que**
le filtre (22) est conçu en tant que filtre stérile,
le filtre (22) présente sur son côté filtrat tourné vers l'évacuation (4) un bord extérieur (23) circonférentiel avec lequel il s'appuie sur un bord d'appui (37) circonférentiel de la partie de fond (10) et est solidement relié à celle-ci,
une chambre pour filtrat (39) stérilisée est formée entre le côté filtrat (38) du filtre (22) et l'évacuation (4) agencée dans la partie de fond (10), et **en ce que** la buse de mélange (19, 20) est agencée dans la chambre de préparation (5) de sorte qu'elle produise un faisceau de solvant orienté qui déplace en un écoulement circulaire le milieu (29) à dissoudre, via le filtre (22).

2. Dispositif de filtration de milieux (1) selon la revendication 1,
**caractérisé en ce que**
un granulat de brassage (32) non soluble par le solvant (30) est agencé dans la chambre de préparation (5).

3. Dispositif de filtration de milieux (1) selon l'une des revendications 1 à 2,
**caractérisé en ce que**
la partie de fond (10) présente un système de canaux (21) qui mène vers l'évacuation (4), lequel est ouvert en allant vers le côté filtrat du filtre (22).

4. Dispositif de filtration de milieux (1) selon l'une des revendications 1 à 3,
**caractérisé en ce que**
le récipient de préparation (2) présente un dispositif d'aération (24) dont au moins une ouverture d'aération (25) est recouverte par un filtre hydrophobe (27).

5. Dispositif de filtration de milieux (1) selon la revendication 4,
**caractérisé en ce que**
l'admission (3) est agencée contre une partie de couvercle (8) du récipient de préparation (2) et
la partie de couvercle (8) présente le dispositif d'aération (24) dont la au moins une ouverture d'aération (25) est recouverte par le filtre hydrophobe (27) sur la surface intérieure de la partie de couvercle (8), laquelle surface intérieure est tournée vers la chambre de préparation (5).

6. Dispositif de filtration de milieux (1) selon la revendication 5,
**caractérisé en ce que**
la partie de couvercle (8) présente un système de canaux (28) ouvert via lequel de l'air à évacuer hors de la chambre de préparation (5) est amené vers le filtre hydrophobe (27).

7. Dispositif de filtration de milieux (1) selon l'une des revendications 1 à 6,
**caractérisé en ce que**
le filtre (22) est conçu en plusieurs couches.

8. Dispositif de filtration de milieux (1) selon l'une des revendications 1 à 7,
**caractérisé en ce que**
deux bras mélangeurs (6, 7) reliés à l'admission (3) sont agencés dans la chambre de préparation (5) avec respectivement au moins une buse de mélange (19, 20) agencée à leurs extrémités libres (17, 18).

9. Dispositif de filtration de milieux (1) selon l'une des revendications 1 à 8,
**caractérisé en ce que**
la buse de mélange (19) ou les buses de mélange (19, 20) sont agencées de façon excentrique par rapport à un axe longitudinal (11) du récipient de préparation (2).

10. Dispositif de filtration de milieux (1) selon la revendication 8 ou 9,
**caractérisé en ce que**
l'admission (3) pénètre dans la chambre de préparation (5) de façon centrée par rapport à l'axe longitudinal (11) du récipient de préparation (2) et passe à travers les bras mélangeurs (6, 7), qui sont respectivement écartés avec leur axe de bras mélangeur (13, 14) d'un angle d'écartement (15, 16) d'entre 15° et 90° par rapport à l'axe longitudinal (11).

11. Dispositif de filtration de milieux (1) selon la revendication 10,
**caractérisé en ce que**
les bras mélangeurs (6, 7) forment un plan vertical vers lequel les buses de mélange (19, 20) sont orientées perpendiculairement et dans des directions de pulvérisation opposées.

12. Procédé de filtration de milieux avec un dispositif de filtration de milieux (1) selon l'une des revendications 1 à 11,
**caractérisé en ce que**
l'admission (3) du dispositif de filtration de milieux (1) est reliée à un réservoir (33) depuis lequel le solvant (30) est amené au récipient de préparation (2) via une vanne de régulation (34) qui est commandée par une unité de commande (35), et **en ce que** l'évacuation (4) du dispositif de filtration de milieux (1) est reliée à un récipient de réception (36) auquel est amenée la solution (31) filtrée.

13. Procédé selon la revendication 12,
**caractérisé en ce que**
pour pré-confectionner le récipient de préparation (2), les étapes suivantes doivent être réalisées :
a) fournir la partie de couvercle (8) et la partie de fond (10) avec la chambre pour filtrat (39) stérilisée,
b) introduire le milieu (29) à dissoudre dans la chambre de préparation (5) et
c) assembler la partie de couvercle (8) et la partie de fond (10).

14. Procédé selon la revendication 13,
**caractérisé en ce que**
à l'étape b, en complément, est introduit le granulat de brassage (32) non soluble par le solvant (30).
